# EUROPÄISCHE PATENTSCHRIFT

(11) **EP 0 716 914 B1**
(45) Veröffentlichungstag und Bekanntmachung des Hinweises auf die Patenterteilung: **06.10.1999**
(21) Anmeldenummer: 95117390.5
(22) Anmeldetag: 04.11.1995
(51) Int. Cl.: B29C 47/08

(54) **Getriebe für einen Doppelschnecken-extruder**
Drive for a twin-screw extruder
Transmission pour extrudeuse à deux vis

(30) Priorität: 14.12.1994 DE 9419889 U
(43) Veröffentlichungstag der Anmeldung: 19.06.1996
(73) Patentinhaber: A. FRIEDR. FLENDER AG, D-46395 Bocholt (DE)
(72) Erfinder: Urban, Ludger, D-46419 Isselburg (DE)
(74) Vertreter: Radünz, Ingo, Dipl.-Ing.

(56) Entgegenhaltungen:
- DE-A- 4 305 133
- DE-U- 9 311 027

## Beschreibung

Die Erfindung betrifft ein Getriebe für einen Doppelschneckenextruder mit den Merkmalen des Oberbegriffes des Anspruches 1.

Derartige Doppelschneckenextruder weisen zwei in einem geringen Abstand voneinander angeordnete, in gleicher oder in gegenläufiger Richtung rotierende Schneckenwellen auf. Als Folge davon müssen auch die Abtriebswellen des Getriebes eng nebeneinander liegen und mit gleich großen Drehmoment angetrieben werden. Das Getriebe selbst hat die Aufgabe, die Motordrehzahl zu reduzieren, das Drehmoment zu wandeln und zu verzweigen und die Axialkräfte aus dem Extruderprozeß aufzunehmen. Bei einem bekannten Getriebe der gattungsgemäßen Art ist die Übersetzung in dem antriebsseitigen, zweiteiligen Teilgehäuse und die Leistungsverzweigung und die Leistungszusammenführung in dem abtriebsseitigen, vierteiligen Teilgehäuse des Getriebegehäuses untergebracht. Je höher das Drehmoment ist, das von dem Getriebe übertragen werden soll, desto höher wird das Bauvolumen und damit das Gewicht des Getriebes.

Der Erfindung liegt die Aufgabe zugrunde, das gattungsgemäße Getriebe derart zu gestalten, daß bei gleichem oder niedrigerem Bauvolumen höhere Drehmomente übertragen werden können.

Diese Aufgabe wird bei einem gattungsgemäßen Getriebe erfindungsgemäß durch die kennzeichnenden Merkmale des Anspruches 1 gelöst. Vorteilhafte Ausgestaltungen der Erfindung sind Gegenstand der Unteransprüche.

Bei dem erfindungsgemäßen Getriebe ist die Leistungsaufteilung mit den antriebsseitigen Enden der Verteilerwellen in dasjenige Teilgehäuse verlegt worden, in dem bisher ausschließlich die Übersetzung untergebracht war. Hierdurch kann das Getriebe und das Getriebegehäuse verkürzt werden, so daß der Platzbedarf, den die aufgrund des höheren Drehmoments breiteren Zahnräder beanspruchen, mehr als ausgeglichen wird. Gleichzeitig wird die Lagerung der ersten Abtriebswelle vereinfacht, weil ein Radiallager und ein über eine Kupplungshülse verbundener Wellenteilabschnitt entfallen können. Weitere Vorteile ergeben sich daraus, daß das Gehäuse einfacher zu bearbeiten ist.

Ein Ausführungsbeispiel der Erfindung ist in der Zeichnung dargestellt und wird im folgenden näher erläutert. Es zeigen:

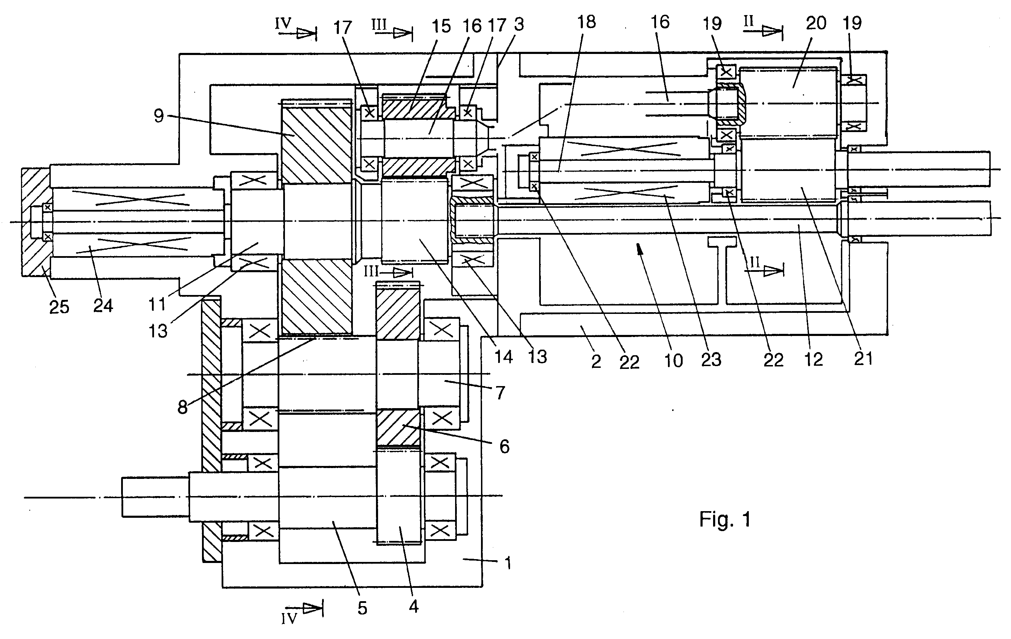

Fig. 1 den Längschnitt durch ein Getriebe,

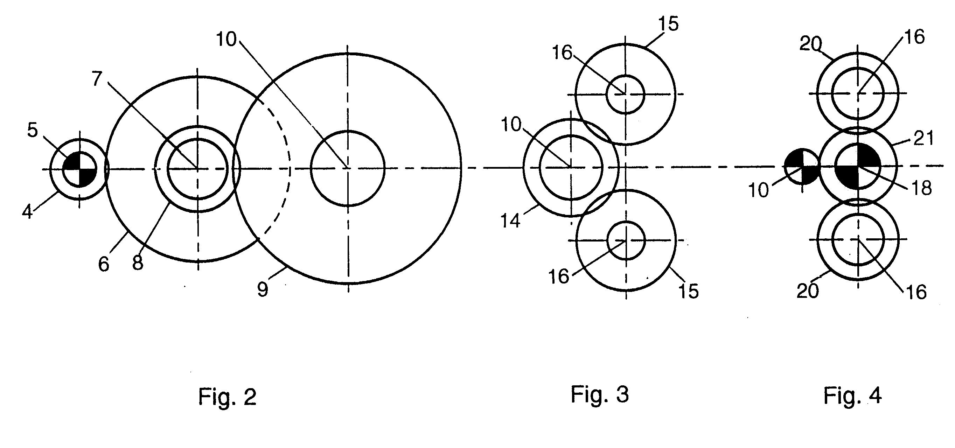

Fig. 2 den Schnitt II-II nach Fig. 1,
Fig. 3 den Schnitt III-III nach Fig. 1 und
Fig. 4 den Schnitt IV-IV nach Fig. 1.

Das Getriebe für einen Doppelschneckenextruder ist in einem Gehäuse untergebracht, das aus einem antriebsseitigen Teilgehäuse 1 und aus einem abtriebsseitigen Teilgehäuse 2 besteht. Die beiden Teilgehäuse 1, 2 sind in einer senkrechten Teilebene 3 lösbar mit einander verbunden.

Das antriebsseitige Teilgehäuse 1 nimmt eine ein Antriebsritzel 4 tragende Antriebswelle 5 auf. Das Antriebsritzel 4 steht mit einem Zahnrad 6 einer Zwischenwelle 7 in Eingriff, deren zweites Zahnrad 8 mit einem Zahnrad 9 kämmt, das auf einer ersten Abtriebswelle 10 drehfest angeordnet ist. Die erste Abtriebswelle 10 besteht aus zwei miteinander verbundenen Teilwellen 11, 12, von denen die antriebsseitige Teilwelle 11 über zwei Radiallager 13 in dem antriebsseitige Teilgehäuse gelagert ist. Die zweite Teilwelle 12 der ersten Abtriebswelle 10 ist durch das abtriebsseitigen Teilgehäuse 2 hindurchgeführt und außerhalb des abtriebsseitigen Teilgehäuses 2 mit einer der Schneckenwellen des nicht gezeigten Doppelschneckenextruders verbunden.

Ein zweites drehfest auf der antriebsseitige Teilwelle 11 der ersten Abtriebswelle 10 angeordnetes Zahnrad 14 steht mit zwei Zahnrädern 15 in Eingriff, von denen jeweils eines auf dem antriebsseitigen Ende von zwei Verteilerwellen 16 angeordnet ist. Die antriebsseitigen Enden der Verteilerwellen 16 sind beiderseits des Zahnrades 15 in Radiallagern 17 gelagert, die in dem antriebsseitigen Teilgehäuse 1 angeordnet sind. Die Verteilerwellen 16 durchdringen das abtriebsseitige Teilgehäuse 2 und liegen oberhalb und unterhalb einer zweiten Abtriebswelle 18. Die abtriebsseitigen Enden der Verteilerwellen 16 sind in Radiallagern 19 gelagert, die in dem abtriebsseitigen Teilgehäuse 2 angeordnet sind. Die Verteilerwellen 16 tragen jeweils ein zweites Zahnrad 20, das mit einem drehfest auf der zweiten Abtriebswelle 18 angeordneten Zahnrad 21 in Eingriff steht.

Die zweite Abtriebswelle 18 ist innerhalb des abtriebsseitigen Teilgehäuses 2 in zwei Radiallager 22 und einem Axiallager 23 gelagert. Das Axiallager 23 ist als Tandem- oder Mehrfachlager ausgebildet. Das aus dem Teilgehäuse 2 herausragenden Ende der zweiten Abtriebswelle 18 ist mit der zweiten Schneckenwelle des Doppelschneckenextruders verbunden.

Zur Erleichterung der Montage des Getriebes ist das Gehäuse jeweils in der Höhe der Wellenebenen geteilt. Dabei enthält das antriebsseitige Teilgehäuse 1 zwei und das abtriebsseitige Teilgehäuse 2 drei horizontale Teilebenen. Die Radiallager 17 der antriebsseitigen Enden der Verteilerwellen 16 sind in Brücken angeordnet. Die Brücken sind in Ausnehmungen, die in die Innenwand des Teilgehäuses 1 eingearbeitet sind, eingesetzt und über Schrauben mit dem Teilgehäuse 1 verbunden.

Die antriebsseitige Teilwelle 11 der ersten Abtriebswelle 10 ist in einem Axiallager 24 gelagert, das auf einem mit dem Teilgehäuse 11 lösbar verbundenen Deckel 25 abgestützt ist. Dieses Axiallager 24 ist ebenfalls als Tandem- oder Mehrfachlager ausgebildet.

## Patentansprüche

1. Getriebe für einen Doppelschneckenextruder mit einem Gehäuse zur Aufnahme einer ersten, über ein Übersetzungsgetriebe angetriebenen, aus zwei Teilwellen (11, 12) bestehenden Abtriebswelle (10) und einer zweite, über zwei beidseitig angeordnete Verteilerwellen (16) und durch die erste Abtriebswelle (10) angetriebenen Abtriebswelle (18), wobei das Gehäuse aus zwei unmittelbar miteinander verbundenen Teilgehäuse (1, 2) besteht und wobei in dem antriebsseitigen Teilgehäuse (1) die Wellen des Übersetzungsgetriebes und die antriebsseitige Teilwelle (11) der ersten Abtriebswelle (10) gelagert und in dem abtriebsseitigen Teilgehäuse (2) die zweite Abtriebswelle (18) axial und radial sowie die abtriebsseitige Teilwelle (12) der ersten Abtriebswelle (10) radial gelagert sind, dadurch gekennzeichnet, daß die Radiallager (17) der antriebsseitigen Enden der verteilerwellen (16) und die auf ihnen angeordneten mit dem Zahnrad (14) auf der ersten Abtriebswelle (10) kämmenden Zahnräder (15) in dem antriebsseitigen Teilgehäuse (1) angeordnet sind und daß in dem abtriebsseitigen Teilgehäuse (2) die Radiallager (19) der abtriebsseitigen Enden der Verteilerwellen (16) und die auf ihnen angeordneten mit dem Zahnrad (21) auf der zweiten Abtriebswelle (18) kämmenden Zahnräder (20) angeordnet sind.

2. Getriebe nach Anspruch 1, dadurch gekennzeichnet, daß die Radiallager (17) der antriebsseitigen Enden der Verteilerwellen (16) in Brücken angeordnet sind, die Ausnehmungen in der Innenwand des antriebsseitigen Teilgehäuses (1) eingesetzt sind.

3. Getriebe nach Anspruch 1 oder 2, dadurch gekennzeichnet, daß das in dem antriebsseitigen Teilgehäuse (1) angeordnete Axiallager (24) der ersten Abtriebswelle (10) als Tandemlager ausgebildet ist.

## Claims

1. Transmission for a double worm extruder with a housing for reception of a first driven shaft (10), which is driven by way of a translation gear and consists of two part shafts (11, 12), and of a second driven shaft (18), which is driven by way of two distributor shafts (16) arranged at both sides and via the first driven shaft (10), wherein the housing consists of two directly interconnected part housings (1, 2) and wherein the shafts of the translation gear and the drive-side part shaft (11) of the first driven shaft (10) are mounted in the part housing (1) at the drive side and the second driven shaft (18) is radially and axially mounted, and the driven-side part shaft (12) of the first driven shaft (10) radially mounted, in the part housing (2) at the driven side, characterised in that the radial bearing (17) of the drive-side ends of the distributor shafts (16) and the gearwheels (15), which are arranged thereon and mesh with the gearwheel (14) on the first driven shaft (10), are arranged in the drive-side part housing (1) and that the radial bearings (19) of the driven-side ends of the distributor shafts (16) and the gearwheels (20), which are arranged thereon and mesh with the gearwheel (21) on the second driven shaft (18), are arranged in the driven-side part housing (2).

2. Transmission according to claim 1, characterised in that the radial bearing (17) of the drive-side ends of the distributor shafts (16) are arranged in bridges which are inserted into recesses in the inner wall of the drive-side part housing (1).

3. Transmission according to claim 1 or 2, characterised in that the axial bearing (24), which is arranged in the drive-side part housing (1), of the first driven shaft (10) is constructed as a tandem bearing.

## Revendications

1. Transmission pour une extrudeuse à double vis, avec un carter destiné à recevoir un premier arbre d'entraînement (10), entraîné par une transmission démultipliée et constitué de deux arbres partiels (11, 12), et un deuxième arbre mené (18), entraîné par deux arbres distributeurs (16), disposés de chaque côté, et par le premier arbre (10), le carter étant constitué de deux carters partiels (1, 2) reliés directement ensemble et, dans le carter partiel (1) situé côté entraînement, les arbres de la transmission démultiplicatrice et l'arbre partiel (11) situé côté entraînement du premier arbre (10) étant montés à rotation et, dans le carter partiel (2), situé côté arbre mené, le deuxième arbre (18) est monté sur un palier axial et radial, et l'arbre partiel (12), situé côté mené, du premier arbre mené (10) étant monté sur un palier radial, caractérisée en ce que les paliers radiaux (17) des extrémités, situées côté entraînement, des arbres distributeurs (16) et les roues dentées (15), disposées sur ceux-ci, et s'engrenant à la roue dentée (14) montée sur le premier arbre (10), sont disposés dans le carter partiel (1) situé côté entraînement, et en ce que dans le carter partiel (2), situé côté mené, sont disposés les paliers radiaux (19) des extrémités, situées côté mené, des arbres distributeurs (16) et les roues dentées (20), disposées sur ceux-ci et s'engrenant à la roue dentée (21) montée sur le deuxième arbre (18)

2. Transmission selon la revendication 1, caractérisée en ce que les paliers radiaux (17) des extrémités situées côté entraînement des arbres distributeurs (16) sont disposés en ponts, insérés dans des évidements ménagés dans la paroi intérieure du carter partiel (1), côté entraînement.

3. Transmission selon la revendication 1, caractérisée en ce que le palier axial (24) disposé dans le carter partiel (1) situé côté entraînement, du premier arbre (10), est réalisé en palier tandem.
